# EUROPÄISCHE PATENTSCHRIFT

(11) **EP 3 475 023 B1**
(45) Veröffentlichungstag und Bekanntmachung des Hinweises auf die Patenterteilung: **05.08.2020**
(21) Anmeldenummer: 17730818.6
(22) Anmeldetag: 21.06.2017
(51) Int. Cl.: B23K 20/10, B23K 37/04, H01R 4/02, H01R 43/02, B23K 101/32

(54) **ULTRASCHALL-SCHWEISSVORRICHTUNG MIT EINEM SPANNSYSTEM UND DESSEN VERWENDUNG**
ULTRASONIC WELDING APPARATUS WITH A CLAMPING SYSTEM AND THE USE THEREOF
APPAREIL DE SOUDAGE PAR ULTRASONS AVEC UN SYSTEME DE SERRAGE ET SON UTILISATION

(30) Priorität: 22.06.2016 EP 16175801
(43) Veröffentlichungstag der Anmeldung: 01.05.2019
(73) Patentinhaber: Delphi Technologies, Inc., Troy, MI 48007 (US)
(72) Erfinder: PACKEBUSCH, Swindhard, 42111 Wuppertal (DE); KASSER, Michael, 42369 Wuppertal (DE)
(74) Vertreter: Manitz Finsterwald Patent- und Rechtsanwaltspartnerschaft mbB
(86) Internationale Anmeldenummer: PCT/EP2017/065256
(87) Internationale Veröffentlichungsnummer: WO 2017/220663

(56) Entgegenhaltungen:
- EP-A1- 1 960 151
- WO-A1-2010/026173
- Nn: "Industrial ultrasonic solutions", , 12. April 2016 (2016-04-12), XP055298832, Gefunden im Internet: URL:http://www.telsonic.com/fileadmin/user _upload/Imagebroschuere_en_2016_low.pdf [gefunden am 2016-08-31]

## Beschreibung

Die Erfindung betrifft eine Ultraschall-Schweißvorrichtung mit einem Spannsystem. Insbesondere betrifft es eine Ultraschall-Schweißvorrichtung mit einem Spannsystem zum Spannen eines Kontaktelements in der Ultraschall-Schweißvorrichtung. Sowie ein Verfahren zum Spannen eines Kontaktelements in dem Spannsystem der Ultraschall-Schweißvorrichtung. Eine Ultraschall-Schweißvorrichtung mit einem Spannsystem nach dem Oberbegriff des Anspruchs 1 ist beispielsweise aus der TELSONIC Corporate Brochure vom 12.04.2016, Seite 17 (http://www.telsonic.com/fileadmin/user_upload/ Imagebroschuere_en_2016_low.pdf) bekannt.

Die hohen Kupferkosten und das Ziel, das Gewicht der Automobile zu senken, um hierdurch auch die Emissionen und den Kraftstoffverbrauch zu reduzieren, führen dazu, dass immer mehr Automobilhersteller Aluminium als Leitermaterial verwenden. Weiterhin sorgt die Elektrifizierung der Automobile für Bauraumprobleme im Motorraum. Die Auslagerung von Bauteilen aus dem Motorraum, wie z.B. der Batterie in das Autoinnere, unter den Beifahrersitz oder gar in den Kofferraum, sind die resultierenden Maßnahmen, um den nötigen Bauraum zu schaffen. Somit sind Leitungslängen von ca. 5 Meter keine Seltenheit und führen zu erhöhten Materialverbrauch und zu steigenden Kosten. Der Gebrauch von alternativen Materialien gewinnt deshalb immer mehr an Bedeutung.

Aluminium hat gegenüber Kupfer sowohl Vor- als auch Nachteile. So ist Kupfer leitfähiger als Aluminium und kann daher für die gleiche Stromstärke kleiner dimensioniert werden. In der Regel ist der Querschnitt einer Aluminiumleitung, je nach ISO-Normquerschnitt, ca. 60-70% größer als der Querschnitt einer Kupferleitung mit gleicher elektrischer Leitfähigkeit. Dennoch bleibt Aluminium trotz der größeren Auslegung bei der gleichen Leiterlänge bis zu 44% leichter als Kupfer.

Der stetige Fortschritt in der Entwicklung des Ultraschall-Schweißprozesses verdrängt und ersetzt zunehmend den Crimpprozess bei Querschnittsgrößen von mehr als 10mm². Die geforderte Prozesssicherheit und Prozessfähigkeit kann mit dem Ultraschall-Schweißen bei der Verarbeitung von Aluminiumleitungen erreicht werden und öffnet neue Möglichkeiten. Das Verfahren bietet auch bei kleineren Querschnitten eine Alternative zur Crimptechnik und etabliert sich kontinuierlich in der Kontaktierungstechnik.

Bei gängigen Ultraschall-Schweißanlagen eingesetzte Spannsysteme zum Halten des Kontaktelements während des Schweißens sind im zweidimensionalen Raum beweglich. Diese übernehmen zwei Aufgaben im Prozess. Die erste besteht darin, ein Terminal auf dem Amboss zu spannen, sodass dieses sich unter dem Einfluss des Ultraschalls während des Schweißprozesses nicht bewegt. Weiterhin begrenzen die Spannbacken seitlich den Raum für die eingelegte Leitung und dienen somit als seitlicher Anschlag und bestimmen gleichzeitig die maximale Schweißbreite.

Hinsichtlich der optimalen Ressourcenausnutzung weisen Spannsysteme einige Nachteile auf. Bei der Konstruktion der Terminals wird ein Bereich, der nur zum Spannen genutzt wird, mitberücksichtigt. Dieser Spannbereich führt zu einer Vergrößerung des Produktes. Bei Schweißungen mit Leitungsquerschnitten von 120mm² beträgt die überstehende Spannbreite bis zu 4mm. Das zusätzliche Material begünstigt weder die mechanischen noch die elektrischen Eigenschaften des Bauteils. Somit erfordert der Schweißprozess eine Überdimensionierung des Terminals für den Spannvorgang. Hierdurch kommt es zu Problemen in weiteren Prozessschritten und in der Endmontage sowie auch beim Endkunden.

Die erhöhte Breite führt dazu, dass auch die elektrische Leistungsverteilerbox angepasst und somit ebenfalls vergrößert werden muss. Dies widerspricht dem Ziel der Automobilindustrie, das Gewicht der Automobile immer weiter zu reduzieren. Weiterhin ist die Vergrößerung der Verteilerboxen problematisch, denn durch die Elektrifizierung der Automobile steht immer weniger Bauraum zur Verfügung, sodass jeder Millimeter sinnvoll genutzt werden muss.

Die Stückkosten der Terminals liegen bei über einem Euro. Der Preis hängt zu einem Teil mit dem teuren Material zusammen. Auch hier führt der zusätzliche Spannbereich am Terminal zu höheren Kosten.

Nachteile des bestehenden Spannsystems haben gravierende Auswirkungen auf das Endprodukt. So sind die Kontaktteile, die an eine Aluminiumleitung geschweißt werden, sehr viel breiter als z.B. die gecrimpten Kabelschuhe an einer Kupferleitung. Dementsprechend müssen Verteilerboxen ebenfalls an die Breite von geschweißten Terminals angepasst werden oder die geschweißten Aluminiumleitungen müssen durch sehr aufwendige Geometrie des Terminals aus den Verteilerboxen herausgeführt werden. Dies ist nicht nur mit Bauraumproblemen, sondern auch mit sehr viel Konstruktionsaufwand verbunden.

Die Aufgabe der Erfindung kann darin gesehen werden, eine Ultraschall-Schweißvorrichtung mit einem neuen Spannsystem bereitzustellen, das auf den seitlichen Spannbereich verzichten kann, sodass die Terminals schmaler gestaltet werden können, wodurch eine Gewichts- und Kostenersparnis bei der Herstellung der Terminals ermöglicht würde. Ein weiteres Ziel ist die weitergeführte Nutzung der bereits bestehenden Leistungsverteilerboxen. Hierdurch lassen sich Kosten für die Neuentwicklung und Anpassung der Boxen einsparen.

Die Aufgabe wird durch den Gegenstand des Anspruch 1 sowie durch das Verfahren nach Anspruch 8 gelöst.

Standarisierte Terminals für die hier genannten Anwendungen haben einen sehr ähnlichen Aufbau. Der sogenannte Dichtungsbereich direkt hinter der Schweißfläche wird zum Versiegeln der leitfähigen Berührungsfläche genutzt. Die Verjüngung dient dem verbesserten Halt von Schrumpfschläuchen auf dem Terminal. Vor dem Versiegeln, bzw. während des Schweißprozesses, kann die Fläche zum Spannen des Werkstücks genutzt werden. Dadurch dass der Schweißbereich keine Flächen zum Klemmen des Kontaktelements bereitstellen muss, kann er vollständig zum Kontaktieren der Einzeladern verwendet werden. So lassen sich bei gegebenem Leitungsquerschnitt schmalere Kontaktelemente einsetzen. Außerdem können bei vorgegebener Kontaktelementbreite größere Leitungsquerschnitte auf diesen, nun breiteren, Schweißbereich angebracht werden.

Vorteilhafte Ausbildungen der Erfindung sind den Unteransprüchen, der Beschreibung und der Zeichnung zu entnehmen.

Gemäß einer Ausführungsform wird im gespannten Zustand der Schweißbereich des Kontaktelements in Richtung der Längsachse durch die Klemmfinger begrenzt. Dieser Aufbau hat den Vorteil, dass beim Einlegen der elektrischen Leitung die Positionierung der Aderenden erleichtert wird. Die Klemmfinger dienen als vorübergehender Anschlag für die Aderenden. Beim Schweißen müssen die Aderenden jedoch ein wenig von den Klemmfingern entfernt sein, da sie sich durch die Temperaturänderung ausdehnen.

Bevorzugt wird im gespannten Zustand der Schweißbereich, der sich quer zur Längsachse von einer ersten Kante bis zu einer zweiten Kante über die Oberfläche des Kontaktelements erstreckt, durch Begrenzungsflächen der Klemmeinheiten begrenzt. Die Begrenzungsflächen begrenzen den Schweißbereich. Bei dem erfinderischen Spannsystem ist es möglich, den gesamten Schweißbereich zum Verschweißen zu benutzen, da keine Bereiche des Schweißbereichs zum Klemmen vorgesehen werden müssen.

Bevorzugt sind die zwei Klemmeinheiten aufeinander zu bewegbar. Der bewegliche Aufbau der Klemmeinheiten erleichtert das Einlegen des Kontaktelements bei der Montage. Die Klemmeinheiten können zum Beispiel durch pneumatische Module bewegt werden.

Nach einer weiteren Ausführungsform sind die Klemmfinger im gespannten Zustand mit ihren Stirnflächen aneinander oder nah beieinander angeordnet und im ungespannten Zustand voneinander beabstandet. Diese Anordnung ermöglicht es, die Kontaktfläche von Klemmbereich und Klemmenflächen der Klemmfinger so groß wie möglich zu gestalten. Durch eine große Kontaktfläche kann das Kontaktelement bei niedriger Flächenpressung trotzdem zuverlässig gehalten werden.

Bevorzugt weisen die Klemmfinger auf den Klemmflächen eine gerändelte Oberfläche in Pyramidenform auf. Die Pyramiden drücken sich beim Klemmen in das Material des Kontaktelements und halten das Kontaktelement beim Schweißvorgang in Position.

Nach einer weiteren Ausführungsform ist die Flächenpressung, die beim Klemmen auf das Kontaktelement (30) wirkt, kleiner als 15 N/mm². Die Größe der Flächenpressung ist kritisch zu betrachten, da eine zu hohe Flächenpressung zu Materialverformungen des Kontaktelements im Spannbereich führt.

Nachfolgend wird die Erfindung anhand einer vorteilhaften Ausführungsform rein beispielhaft unter Bezugnahme auf die beigefügte Zeichnung beschrieben. Es zeigen:
- Fig. 1: zeigt in perspektivische Darstellung einen Teil des Spannsystems nach dem Stand der Technik.
- Fig. 2: zeigt in perspektivische Darstellung einen Teil des Spannsystems mit einem Kontaktelement im gespannten Zustand.
- Fig. 3: zeigt in perspektivische Darstellung einen Teil des Spannsystems nach erfolgtem Schweißvorgang, mit einem Kontaktelement und angeschweißter elektrischen Leitung.
- Fig. 4 (a-c): zeigt eine Gegenüberstellung der alten und neuen Klemmbereiche auf dem Kontaktelement in einer Draufsicht.
- Fig. 5: zeigt in perspektivische Darstellung einen Teil des Spannsystems in nicht gespanntem Zustand.
- Fig. 6: zeigt in perspektivische Darstellung den, dem Kontaktelement zugewandten, Klemmbereich einer Klemmeinheit.

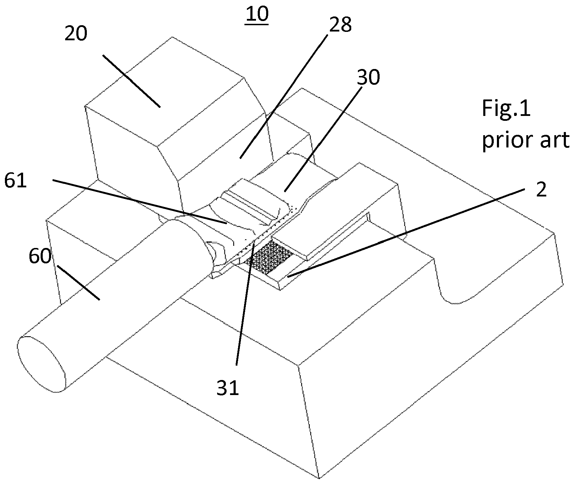

Figur 1 zeigt in perspektivische Darstellung einen Teil des Spannsystems 10 nach dem Stand der Technik in gespanntem Zustand. In dieser Darstellung wird nur eine Klemmeinheit 20 dargestellt um das Kontaktelement 30 und die eingeschweißten Einzeladern 61 nicht zu verdecken.

Die Klemmeinheit 20 drückt mit einer unteren Fläche auf einen Randbereich des Schweißbereichs 31 des Kontaktelements 30, um die rückwärtige Fläche des Kontaktelements 30 gegen einen 2 der Ultraschall-Schweißvorrichtung 1 zu pressen. Dank der nicht dargestellten zweiten Klemmeinheit 21 ist zu sehen, dass beim Schweißen nicht die gesamte Breite des Schweißbereichs 31 mit Einzeladern 61 bedeckt ist.

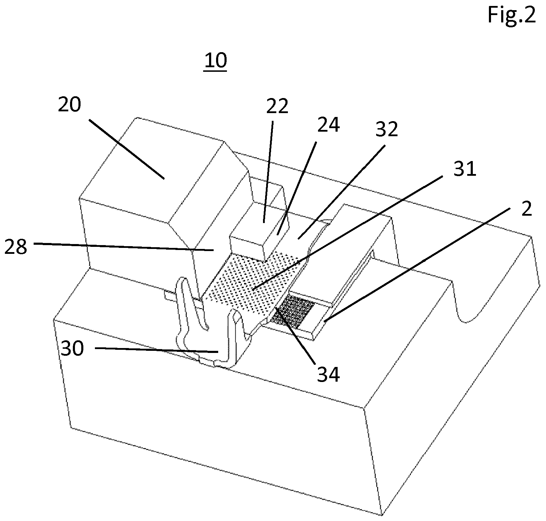

Figur 2 zeigt in perspektivischer Darstellung das Spannsystem 10 im gespannten Zustand, ein Kontaktelement 30 haltend. Die beiden Klemmeinheiten 20, 21 sind symmetrisch zur Längsachse X des Kontaktelements 30 angeordnet. Zur besseren Sichtbarkeit des Kontaktelements 30 ist wie in Figur 1 nur eine Klemmeinheit 20 dargestellt. Die beiden Klemmeinheiten 20, 21 sind aufeinander zugefahren, so dass die Stirnflächen 24, 25 der Klemmfinger 22, 23 sich gegenseitig berühren oder zumindest fast berühren. Die Klemmeinheiten 20, 21 sind ebenfalls abgesenkt, so dass die Klemmflächen 26, 27 auf dem Klemmbereich 32 des Kontaktelements 30 aufliegen und dieses gegen den Amboss 2 drücken. Der Schweißbereich 31 wird durch die beiden Klemmfinger 20, 23 und die beiden Begrenzungsflächen 28, 29, die durch die Klemmeinheiten 20, 21 gebildet werden, umrandet. Die erste Kante 34 des Kontaktelements 30 grenzt an eine erste Begrenzungsfläche 28 der ersten Klemmeinheit 20. Auf der anderen Seite grenzt die zweite Kante 35 des Kontaktelements 30 an eine zweite Begrenzungsfläche 29 der zweiten Klemmeinheit 21 an. In diesen dreiseitig abgeschlossenen Raum werden beim Schweißvorgang die Einzeladern 61 eingelegt und mit dem Kontaktelement 30 verschweißt. Durch diesen Aufbau können die Einzeladern 61 den gesamten Schweißbereich 31 kontaktieren. Es wird keine Klemmfläche an den Seiten des Schweißbereichs 31 benötigt.

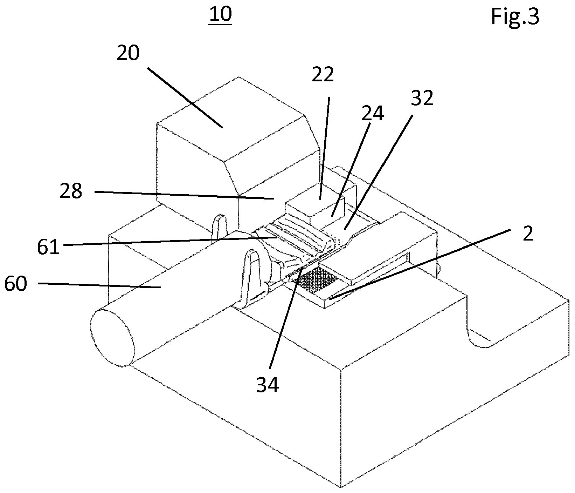

Figur 3 zeigt eine Draufsicht auf das Spannsystem 10 mit einer angeschweißten elektrischen Leitung 60 in gespanntem Zustand. Auch hier ist zur besseren Sichtbarkeit die zweite Klemmeinheit 21 nicht dargestellt. In dieser Darstellung ist zu sehen, dass das Kontaktelement 30 so in das Spannsystem 10 eingespannt ist, dass der mittlere Bereich des Kontaktelements 30 durch die Klemmfinger 22, 23 fixiert wird. Im Schweißbereich 31 sind die Einzeladern 61 einer angeschweißten elektrischen Leitung 60 dargestellt. Der Kontaktierbereich 33 des Kontaktelements 30 ist bei dieser Variante gebogen und ragt in die Darstellungsebene der Darstellung hinein. Würde Figur 3 auch die zweite Klemmeinheit 21 beinhalten, wäre gut zu sehen, wie die Begrenzungsflächen 28, 29 und die Klemmfinger 22, 23 U-förmig den Schweißbereich 31 umranden.

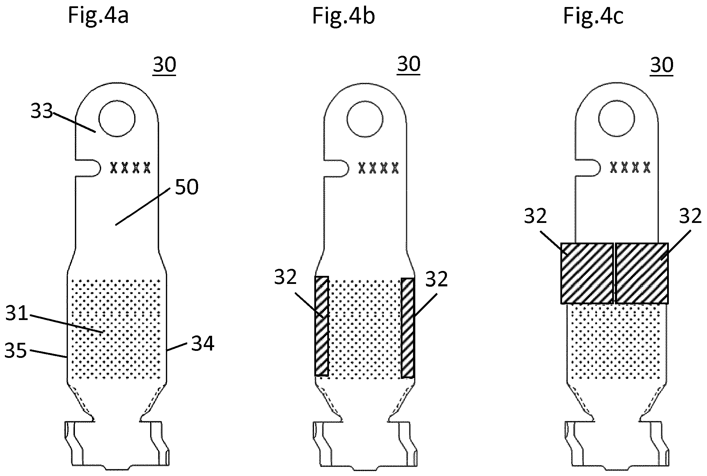

Figur 4(a-c) zeigt ein gängiges Kontaktelement 30 wie es in einer Ultraschall-Schweißvorrichtung 1 verwendet wird. Das Kontaktelement 30 kann im Wesentlichen in drei Bereiche eingeteilt werden. Der Kontaktierbereich 33 dient zum Verbinden des Kontaktelements 30 mit einem komplementären Kontaktelement oder einem Schraubanschluss (Bolzen). Daran schließt sich ein Bereich an, der herkömmlicher Weise zum Abdichten des Kontaktelements 30 genutzt wird. Bei dem hier beschriebenen Spannsystem 10 wird dieser Bereich, zumindest teilweise, als Klemmbereich 32 benutzt. An den Dichtungsbereich grenzt der Schweißbereich 31 an. In einigen Ausführungsformen von Kontaktelementen 30 schließt sich nach dem Schweißbereich 31 noch ein Crimpbereich an, der dazu dient, die angeschweißte elektrische Leitung 60 zusätzlich an dem Kontaktelement 30 zu halten.

Figuren 4b und 4c zeigen eine Gegenüberstellung der Klemmbereiche 32 von herkömmlichen Spannsystemen 10 (Figur 4b) und dem neuem Spannsystem 10 (Figur 4c) in einer Draufsicht. In Darstellung 4b ist zu sehen, dass der Klemmbereich 32 entlang der ersten und zweiten Kante 34, 35, des Schweißbereichs 31 verläuft. Um den Schweißbereich 31 nicht zu sehr einzuengen, sind diese Klemmbereiche 32 sehr schmal. Um das Kontaktelement 30 trotzdem sicher zu halten, muss hier mit einer großen Flächenpressung gearbeitet werden. In Darstellung 4c ist der Klemmbereich 32 großflächig in den Dichtungsbereich des Kontaktelements 30 verlegt worden. Durch die größere Fläche kann die benötigte Kraft pro Fläche reduziert werden.

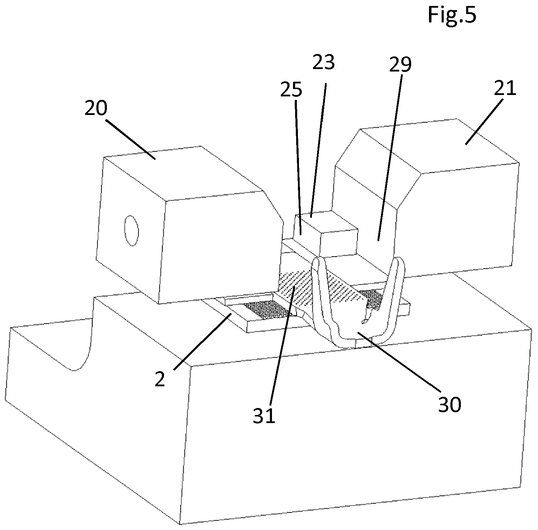

Figur 5 zeigt eine perspektivische Darstellung des Spannsystems 10 im nicht gespannten Zustand. Die beiden Klemmeinheiten 20, 21 des Spannsystems 10 haben sich vom Kontaktelement 30 jeweils nach außen hin bewegt, wie auch von der Klemmposition weg. In dieser Position kann ein Kontaktelement 30 in das Spannsystem 10 eingelegt oder entnommen werden.

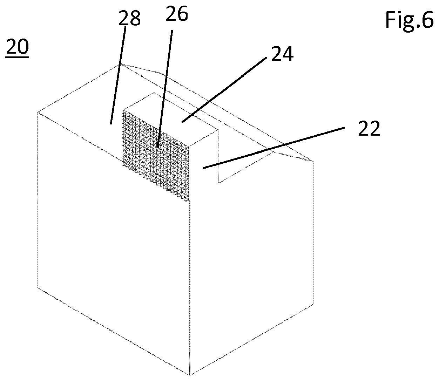

Figur 6 zeigt eine perspektivische Darstellung eine Klemmeinheit 20. Die Ansicht zeigt die Klemmfläche 26 des Klemmfingers 22. Die Klemmfläche 26 ist in dieser Ausführungsform mit einer Rändelung in Pyramidenform versehen.

## Patentansprüche

1. Ultraschall-Schweißvorrichtung (1) mit einem Spannsystem (10) zum Spannen eines Kontaktelements (30) in der Ultraschall-Schweißvorrichtung (1), umfassend zwei Klemmeinheiten (20, 21) die beabstandet voneinander angeordnet und mit der Ultraschall-Schweißvorrichtung (1) mechanisch verbunden sind, wobei jede Klemmeinheit (20, 21) einen Klemmfinger (22, 23) aufweist, wobei jeder Klemmfinger (22, 23) eine Stirnfläche (24, 25) aufweist und sich diese Stirnflächen (24, 25) gegenüberliegen, wobei jeder Klemmfinger (22, 23) eine Klemmfläche (26, 27) aufweist, wobei die Klemmflächen (26, 27) im gespannten Zustand, auf die Oberfläche (50) eines Kontaktelements (30) drücken, wodurch das Kontaktelement (30) gegen einen Ambos (2) der Ultraschall-Schweißvorrichtung (1) gedrückt wird, wobei das Kontaktelement (30) eine längliche, flache Form hat und entlang einer Längsachse (X) einen Schweißbereich (31), einen Klemmbereich (32) und einen Kontaktierungsbereich (33) aufweist, wobei die Klemmflächen (26, 27) im gespannten Zustand auf den Klemmbereich (32) des Kontaktelements (30) drücken, **dadurch gekennzeichnet, dass** der Klemmbereich (32) zwischen dem Schweißbereich (31) und dem Kontaktierungsbereich (33) des Kontaktelements (30) angeordnet ist.

2. Ultraschall-Schweißvorrichtung (1) nach Anspruch 1, **dadurch gekennzeichnet, dass** im gespannten Zustand der Schweißbereich (31) des Kontaktelements (30) in Richtung der Längsachse (X) durch die Klemmfinger (22, 23) begrenzt wird.

3. Ultraschall-Schweißvorrichtung (1) nach einem der vorhergehenden Ansprüche, **dadurch gekennzeichnet, dass** im gespannten Zustand, der Schweißbereich (31), der sich quer zur Längsachse (X) von einer ersten Kante (34) bis zu einer zweiten Kante (35) über die Oberfläche (50) des Kontaktelements (30) erstreckt, durch Begrenzungsflächen (28, 29) der Klemmeinheiten (20, 21) begrenzt wird.

4. Ultraschall-Schweißvorrichtung (1) nach einem der vorhergehenden Ansprüche, **dadurch gekennzeichnet, dass** die zwei Klemmeinheiten (20,21) aufeinander zu bewegbar sind.

5. Ultraschall-Schweißvorrichtung (1) nach einem der vorhergehenden Ansprüche, **dadurch gekennzeichnet, dass** die Klemmfinger (22, 23) im gespannten Zustand mit ihren Stirnflächen (24,25) aneinander oder nah beieinander angeordnet sind und im ungespannten Zustand voneinander beabstandet sind.

6. Ultraschall-Schweißvorrichtung (1) nach einem der vorhergehenden Ansprüche, **dadurch gekennzeichnet, dass** die Klemmfinger (22, 23) auf den Klemmflächen (26, 27) eine gerändelte Oberfläche in Pyramidenform aufweisen.

7. Ultraschall-Schweißvorrichtung (1) nach einem der vorhergehenden Ansprüche, **dadurch gekennzeichnet, dass** die Flächenpressung, die beim Klemmen auf das Kontaktelement (30) wirkt, kleiner als 15 N/mm² ist.

8. Verfahren zum Spannen eines Kontaktelements (30) in einer Ultraschall-Schweißvorrichtung (1) mittels eines Spannsystems (10) nach einem der vorhergehenden Ansprüche, umfassend die Schritte:
a) Einlegen eines Kontaktelements (30) in das Spannsystem (10), wobei das Kontaktelement (30) zwischen den Klemmeinheiten (20, 21) angeordnet wird.
b) Positionieren des Kontaktelements (30), sodass der Klemmbereich (32) in Richtung quer zur Längsachse (X) mit den Klemmfingern (22, 23) fluchtet.
c) Aufeinander Zufahren der Klemmeinheiten (20, 21).
d) Verfahren der Klemmeinheiten (20, 21), sodass die Klemmflächen (26, 27) der Klemmfinger (22, 23) gegen den Klemmbereich (32) gedrückt werden, wobei der Klemmbereich (32) zwischen dem Kontaktierungsbereich (33) und dem Schweißbereich (31) angeordnet ist.

## Claims

1. An ultrasound welding apparatus (1) having a clamping system (10) for clamping a contact element (30) in the ultrasound welding apparatus (1), comprising two clamping units (20, 21) which are arranged spaced apart from one another and which are mechanically connected to the ultrasound welding apparatus (1), wherein each clamping unit (20, 21) has a clamping finger (22, 23); wherein each clamping finger (22, 23) has an end face (24, 25) and these end faces (24, 25) are disposed opposite one another; wherein each clamping finger (22, 23) has a clamping surface (26, 27); wherein the clamping surfaces (26, 27) press onto the surface (50) of a contact element (30) in a clamped state, whereby the contact element (30) is pressed against an anvil (2) of the ultrasound welding apparatus (1); wherein the contact element (30) has an elongate, flat shape and has a welding region (31), a clamping region (32) and a contacting region (33) along a longitudinal axis (X); and wherein the clamping surfaces (26, 27) press onto the clamping region (32) of the contact element (30) in the clamped state, **characterized in that** the clamping region (32) is arranged between the welding region (31) and the contacting region (33) of the contact element (30).

2. An ultrasound welding apparatus (1) in accordance with claim 1, **characterized in that** the welding region (31) of the contact element (30) is bounded by the clamping fingers (22, 23) in the direction of the longitudinal axis (X) in the clamped state.

3. An ultrasound welding apparatus (1) in accordance with any one of the preceding claims, **characterized in that** the welding region (31), which extends transversely to the longitudinal axis (X) from a first edge (34) up to a second edge (35) over the surface (50) of the contact element (30), is bounded by boundary surfaces (28, 29) of the clamping units (20, 21) in the clamped state.

4. An ultrasound welding apparatus (1) in accordance with any one of the preceding claims, **characterized in that** the two clamping units (20, 21) are movable toward one another.

5. An ultrasound welding apparatus (1) in accordance with any one of the preceding claims, **characterized in that** the end faces (24, 25) of the clamping fingers (22, 23) are arranged next to one another or close to one another in the clamped state and are spaced apart from one another in the unclamped state.

6. An ultrasound welding apparatus (1) in accordance with any one of the preceding claims, **characterized in that** the clamping fingers (22, 23) on the clamping surfaces (26, 27) have a knurled surface in a pyramid shape.

7. An ultrasound welding apparatus (1) in accordance with any one of the preceding claims, **characterized in that** the surface pressure which acts on the contact element (30) during the clamping is less than 15 N/mm².

8. A method of clamping a contact element (30) in an ultrasound welding apparatus (1) by means of a clamping system (10) in accordance with any one of the preceding claims, comprising the steps:
a) inserting a contact element (30) into the clamping system (10), with the contact element (30) being arranged between the clamping units (20, 21);
b) positioning the contact element (30) such that the clamping region (32) is aligned with the clamping fingers (22, 23) in a direction transverse to the longitudinal axis (X);
c) moving the clamping units (20, 21) toward one another; and
d) moving the clamping units (20, 21) such that the clamping surfaces (26, 27) of the clamping fingers (22, 23) are pressed against the clamping region (32), with the clamping region (32) being arranged between the contacting region (33) and the welding region (31).

## Revendications

1. Dispositif de soudage par ultrasons (1) comportant un système de serrage (10) pour serrer un élément de contact (30) dans le dispositif de soudage par ultrasons (1),
comprenant deux unités de coincement (20, 21) disposées à distance l'une de l'autre et reliées mécaniquement au dispositif de soudage par ultrasons (1), chaque unité de coincement (20, 21) présentant un doigt de coincement (22, 23), chaque doigt de coincement (22, 23) présentant une face frontale (24, 25) et ces faces frontales (24, 25) se faisant face, chaque doigt de coincement (22, 23) présentant une face de coincement (26, 27), les faces de coincement (26, 27) pressant sur la surface (50) d'un élément de contact (30) dans l'état serré,
moyennant quoi l'élément de contact (30) est pressé contre une enclume (2) du dispositif de soudage par ultrasons (1), l'élément de contact (30) ayant une forme plate allongée et comprenant le long d'un axe longitudinal (X) une zone de soudage (31), une zone de coincement (32) et une zone de mise en contact (33), les faces de coincement (26, 27) pressant sur la zone de coincement (32) de l'élément de contact (30) dans l'état serré, **caractérisé en ce que**
la zone de coincement (32) est disposée entre la zone de soudage (31) et la zone de mise en contact (33) de l'élément de contact (30).

2. Dispositif de soudage par ultrasons (1) selon la revendication 1,
**caractérisé en ce que**
dans l'état serré, la zone de soudage (31) de l'élément de contact (30) est délimitée par les doigts de coincement (22, 23) en direction de l'axe longitudinal (X).

3. Dispositif de soudage par ultrasons (1) selon l'une des revendications précédentes,
**caractérisé en ce que**
dans l'état serré, la zone de soudage (31) s'étendant transversalement à l'axe longitudinal (X) depuis un premier bord (34) jusqu'à un second bord (35) sur la surface (50) de l'élément de contact (30) est délimitée par des faces de délimitation (28, 29) des unités de coincement (20, 21).

4. Dispositif de soudage par ultrasons (1) selon l'une des revendications précédentes,
**caractérisé en ce que**
les deux unités de coincement (20, 21) sont mobiles l'une vers l'autre.

5. Dispositif de soudage par ultrasons (1) selon l'une des revendications précédentes,
**caractérisé en ce que**
dans l'état serré, les doigts de coincement (22, 23) ont leurs faces frontales (24, 25) l'une contre l'autre ou étroitement l'une contre l'autre, et dans l'état non serré, ils sont espacés l'un de l'autre.

6. Dispositif de soudage par ultrasons (1) selon l'une des revendications précédentes,
**caractérisé en ce que**
les doigts de coincement (22, 23) présentent sur les faces de coincement (26, 27) une surface moletée en forme de pyramide.

7. Dispositif de soudage par ultrasons (1) selon l'une des revendications précédentes,
**caractérisé en ce que**
la pression de surface agissant sur l'élément de contact (30) lors du coincement est inférieure à 15 N/mm².

8. Procédé pour serrer un élément de contact (30) dans un dispositif de soudage par ultrasons (1) au moyen d'un système de serrage (10), selon l'une des revendications précédentes, comprenant les étapes consistant à :
a) insérer un élément de contact (30) dans le système de serrage (10), l'élément de contact (30) étant disposé entre les unités de coincement (20, 21),
b) positionner l'élément de contact (30) de telle sorte que la zone de coincement (32) est en alignement avec les doigts de coincement (22, 23) en direction transversale à l'axe longitudinal (X),
c) approcher les unités de coincement (20, 21) l'une vers l'autre,
d) déplacer les unités de coincement (20, 21) de telle sorte que les faces de coincement (26, 27) des doigts de coincement (22, 23) sont pressées contre la zone de coincement (32), la zone de coincement (32) étant disposée entre la zone de mise en contact (33) et la zone de soudage (31).
